**Europäisches Patentamt**

**European Patent Office**

**Office européen des brevets**

(19)

(11) Veröffentlichungsnummer: **0 065 313**
**A2**

(12) # EUROPÄISCHE PATENTANMELDUNG

(21) Anmeldenummer: **82104348.6**

(22) Anmeldetag: **18.05.82**

(51) Int. Cl.³: **H 04 N 5/44**

(30) Priorität: **20.05.81 FI 811559**

(43) Veröffentlichungstag der Anmeldung: **24.11.82**
**Patentblatt 82/47**

(84) Benannte Vertragsstaaten: **DE GB NL SE**

(71) Anmelder: **Aspo Oy, Olariniuoma 15,**
**SF-02200 Espoo 20 (FI)**

(72) Erfinder: **Hyrkäs, Matti P., Löydöstie 4 C,**
**SF-01600 Vantaa 60 (FI)**
Erfinder: **Korhonen, Jukka P., Rasinrinne 3-5 B 33,**
**SF-01360 Vantaa 36 (FI)**
Erfinder: **Saksa, Antti, Dipl.-Ing., Norotie 12 A 3,**
**SF-01600 Vantaa 60 (FI)**

(74) Vertreter: **Hennicke, Albrecht et al,**
**Kaiser-Wilhelm-Ring 24, D-5000 Köln 1 (DE)**

(54) Verfahren zum Verlängern der Gebrauchsdauer des Bildschirmes einer Daten- oder Video-Monitor-Röhre.

(57) Verfahren zum Verlängern der Gebrauchsdauer des Bildschirmes einer Röhre eines Daten- oder Video-Monitors, der einerseits mit einem Feldablenkspulenjoch versehen ist, das von einer Feldablenkanschlusseinheit mit einer Feldfrequenz von beispielsweise 50 Hz gesteuert wird und der andererseits ein Zeilenablenkspulenjoch aufweist, das von einer Zeilenablenkanschlusseinheit mit einer Zeilenfrequenz von beispielsweise 15.625 Hz gesteuert wird. Um zu vermeiden, dass insbesondere bei Endanzeige-Monitoren von Datenverarbeitungsanlagen die angezeigten Werte, wie Buchstaben, Zahlen und Punkte immer wieder an der gleichen Stelle erscheinen und hierdurch einen raschen Verschleiss dieser Stellen auf dem Bildschirm hervorrufen, wird sowohl dem Zeilenfrequenzsignal als auch dem Feldfrequenzsignal ihr eigenes zusätzliches Steuersignal mit einer sehr niedrigen Frequenz hinzugefügt, um einen Bildpunkt langsam innerhalb eines kleinen Bereiches auf dem Bildschirm zu verschieben. Hierdurch wird der gesamte Bildschirm wirkungsvoll ausgenutzt.

PATENTANWÄLTE
DIPL.-ING. BUSCHHOFF
DIPL.-ING. HENNICKE
DIPL.-ING. VOLLBACH
KAISER-WILHELM-RING 24
5000 KÖLN 1

0065313

Aktenz.:

Reg.-Nr.

**Ap 101 EU**
bitte angeben

KÖLN, den **17.5.1982**
he/kr

Anm.: **Firma Aspo Oy, Olarinluoma 15, 02200 Espoo 20 (Finnland)**

Titel: Verfahren zum Verlängern der Gebrauchsdauer des Bildschirmes einer Daten- oder Video-Monitor-Röhre

---

Die Erfindung betrifft ein Verfahren zum Verlängern der Gebrauchsdauer des Bildschirmes einer Daten- oder Video-Monitor-Röhre, deren Monitor ein Feldablenkspulenjoch aufweist, das von einer Feldablenkanschlußeinheit mit einer Feldfrequenz von z.B. 50 Hz gesteuert wird und das ein Zeilenablenkspulenjoch aufweist, das von einer Zeilenablenkanschlußeinheit mit einer Zeilenfrequenz von beispielsweise 15.625 Hz gesteuert wird, wobei sowohl das Zeilen- als auch das Feldablenksignal durch ihr eigenes Extrasteuersignal mit einer sehr niedrigen Frequenz ergänzt werden können, um einen Bildpunkt innerhalb eines kleinen Bereiches auf dem Bildschirm zu verschieben.

Sowohl bei Daten-Monitoren als auch bei Endanzeige-Monitoren von Datenverarbeitungsanlagen befinden sich die Buchstaben, Zahlen, Punkte und anderen Anzeigen in den meisten Fällen an gleichen Stellen auf dem Bildschirm. Auch bei Video-Monitoren, die zum Beobachten verschiedener Geräte verwendet werden, befinden sich die hellen Flecken im allgemeinen an den gleichen Stellen. Dies führt zu einem intensiven Verschleiß dieser Stellen auf dem Bildschirm, mit der Folge, daß die Lebensdauer der Bildröhre übermäßig kurz ist.

0065313

Zur Lösung dieses Problems gibt es einen älteren Vorschlag (DE-OS 1 941 432) nach dem ein Bild durch Ändern der Ablenkspannungen (oder -ströme) zyklisch verschoben wird, wodurch es möglich wird, einen bestimmten Bildpunkt an verschiedene Stellen zu verschieben, deren Anzahl von der Zahl der verschiedenen Kombinationen der zugeführten Änderungen abhängt. Hierdurch wird eine gewisse Verbesserung erreicht und die Zerstörung einer Bildröhre vermieden, die ihre Ursache darin hat, daß ein Bild eine übermäßig lange Zeit an der gleichen Stelle bleibt. Dieses Verfahren ist jedoch durch verschiedene Nachteile beeinträchtigt. Erstens erscheint die zyklische Verschiebung eines Bildes zeitweilig als störende Bildvibration. Zweitens kann die Schirmbildfläche einer Bildröhre nicht vollständig ausgenützt werden und anstelle eines Verschleißpunktes gibt es nun mehrere Verschleißpunkte, während ein Teil des Bildschirmes dennoch ungenutzt bleibt.

Die deutsche Offenlegungsschrift 2 844 112 beschreibt einen Stand der Technik, der in dem kanadischen Patent Nr. 267 742 dargelegt ist, und wonach ein Bild von einem von der Umgebungstemperatur abhängigen Element langsam über kleine Entfernungen auf dem Bildschirm bewegt werden kann. Um diesen Vorgang wirkungsvoll durchzuführen, benötigt dieses System eine sich kontinuierlich ändernde Umgebungstemperatur und auch dann würde sich ein Bild immer auf dem gleichen Wege verschieben.

Aufgabe der Erfindung ist es, das eingangs angegebene Verfahren derart zu verbessern, daß sich die beiden zusätzlichen Steuersignale im wesentlichen kontinuierlich ändern, um einen Bildpunkt langsam innerhalb einer kleinen Fläche zu verschieben und daß die Frequenzen der hinzugefügten Signale so wenig voneinander abweichen, daß die zwischen ihnen bestehende Phasendifferenz sich von Null zu Null über eine sehr lange Zeitspanne erstreckt, die vorzugsweise viele Male das Zehnfache oder Hundertfache der Umlaufdauer dieser Signale beträgt.

Unter Berücksichtigung der Tatsache, daß sich die Steuersignale im wesentlichen kontinuierlich ändern, ist es möglich zu erreichen, daß sich ein Bildpunkt ohne sichtbare Rucke langsam verschiebt. Die im wesentlichen kontinuierliche Änderung eines Signals bedeutet, daß ein Signal sich über einen größeren Teil der Länge seines Zyklus ändert. In Anbetracht der Tatsache, daß die Frequenzen der den Zeilen- und Feldablenkungssignalen hinzuzufügenden Steuersignale durch eine geringe Phasendifferenz voneinander abweichen, kann ein Bildpunkt über einen Flächenbereich verteilt werden und muß nicht immer den gleichen Weg nehmen.

Auf diese Weise kann der gesamte Bildschirm ausgenutzt werden, jedoch ohne das Monitor-Bild zu stören, d.h., ohne die Verschiebung der Bildpunkte erkennbar zu machen.

Wenn sich die Steuersignale wieder in der gleichen Phase befinden, kehrt ein Bildpunkt nach dem erwähnten sehr langen Zeitabschnitt wieder genau an die gleiche Stelle zurück. Die Dauer der zusätzlichen Steuersignale liegt vorzugsweise in der Größenordnung von 1 bis 5 Minuten, wodurch die Verschiebung eines Bildpunktes sehr langsam vor sich geht. Auf diese Weise kann die Phasendifferenz zwischen den Steuersignalen so gewählt werden, daß sich der Verschiebeweg nach mehreren Stunden wiederholt.

Die Frequenzen der zusätzlichen Steuersignale können nach der Feldfrequenz eines Monitors oder nach der Netzfrequenz synchronisiert werden.

Im folgenden wird die Art der Durchführung des Verfahrens unter Bezugnahme auf die beigefügte Zeichnung weiter beschrieben in der

Fig. 1 ein Blockdiagramm darstellt, welches eine Vorrichtung zeigt, die zur Durchführung
des Verfahrens verwendet wird, während

Fig. 1a    die Steuersignale verdeutlicht und

Fig. 2     die Vorderansicht eines Bildschirmes darstellt, auf dem ein Bildpunkt innerhalb
           einer kleinen Fläche verschoben wird, wie
           sie beispielsweise in Fig. 2a anschaulich
           dargestellt ist.

Das Bezugszeichen 1 bezeichnet einen Impulsseparator, der
durch eine Feldablenkanschlußeinheit 2 ein Feldablenkspulenjoch 4 mit einer Feldfrequenz (50 Hz) und über eine
Zeilenablenkanschlußeinheit 3 ein Zeilenablenkspulenjoch
5 mit einer Zeilenfrequenz (15.625 Hz) steuert. Hierdurch
wird die Feld- und Zeilenablenkung eines Elektronenstrahles hervorgerufen, der in bekannter Weise durch ein Video-
Signal auf dem Bildschirm 7 einer Bildröhre 6 gesteuert
wird. Daten-Monitoren, wie beispielsweise die Monitoren
für die Endanzeige von Datenverarbeitungsanlagen, haben
die charakteristische Eigenschaft, daß die angezeigten
Werte, wie Buchstaben, Ziffern, Punkte usw. auf dem Schirm
7 immer die gleiche Stelle einnehmen. Diese besonderen
Flecken des Schirmes 7 sind schnell verschlissen. Das
gleiche Problem tritt in allgemeiner Form bei Video-Monitoren auf, die beispielsweise zur Beobachtung von relativ
unbewegten Objekten verwendet werden.

Um dieses Problem zu lösen, schlägt die Erfindung die folgenden zusätzlichen Maßnahmen vor:

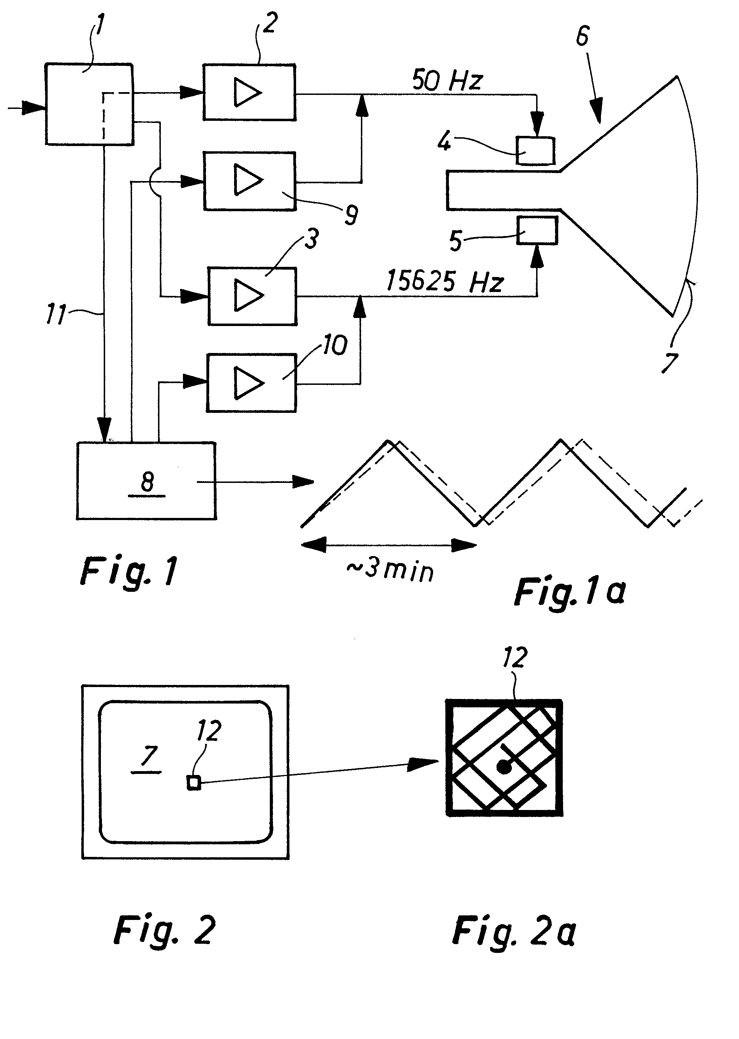

In einer logischen Steuerschaltung 8 werden in an sich bekannter Weise die in Fig. 1a dargestellten Steuersignale
entwickelt, deren Periodendauer ca. 3 Minuten beträgt. Die
Frequenzen der entwickelten Steuersignale unterscheiden
sich so geringfügig voneinander, daß die zwischen ihnen liegende Phasendifferenz sich von Null zu Null über eine
sehr lange Zeitspanne erstreckt, die ca. 8 Stunden beträgt. Ein Steuersignal wird durch einen Endverstärker 9
geschickt und dem Feldablenksignal hinzugefügt. Das andere Steuersignal wird durch einen Endverstärker 10 geschickt und dem Zeilenablenksignal hinzugefügt. Durch die
Verstärker 9 und 10 wird die Amplitude der Steuersignale
so ausgewählt, daß die hierdurch auf den Bildschirm hervorgerufene Ablenkung eines Bildpunktes innerhalb einer
sehr kleinen Fläche 12 bleibt. Infolge der Phasendifferenz der Steuersignale bewegt sich ein Bildpunkt in jedem
Steuerzyklus längs eines verschiedenen Weges, bis er in
seine Anfangsstellung zurückkehrt, wenn die Phasendifferenz der Steuersignale wieder die gleiche, beispielsweise
Null ist.

Fig. 2a zeigt das Prinzip, nachdem ein Bildpunkt sich innerhalb einer kleinen Fläche 12 des Bildschirmes bewegt.
Steuersignale werden auf der Basis der Feldfrequenz synchronisiert, wie dies durch einen Pfeil 11 angedeutet ist.
Alternativ kann die Synchronisation auch durch die Netzfrequenz bewirkt werden.

Da ein Fachmann aufgrund der obigen Beschreibung die Erfindung durch Auswahl mehrerer verschiedener Schaltungen
ausführen kann, sind diese hier nicht näher beschrieben.
Es gibt auch noch andere Wege als eine Phasendifferenz
der Steuersignale nach Fig. 1a, um die Verschiebung eines
Bildpunktes in der Weise zu bewirken, daß er so gleichmäßig wie möglich einen bestimmten Bereich des Schirmes
überdeckt. Beispielsweise kann eine Fläche 12 auch durch
geeignete wechselnde Steuersignale von verschiedener Gestalt über_deckt werden.

A n s p r ü c h e :


1, Verfahren zum Verlängern der Gebrauchsdauer des Bildschirmes (7) der Bildröhre (6) eines Daten- oder Video-Monitors, der ein von einer Feldablenkanschlußeinheit (2) mit einer Feldfrequenz von z.B. 50 Hz gesteuertes Feldablenkspulenjoch (4) und ein von einer Zeilenablenkanschlußeinheit (3) mit einer Zeilenfrequenz
   von z.B. 15.625 Hz gesteuertes Zeilenablenkspulenjoch
   (5) aufweist und bei dem sowohl dem Zeilenablenksignal
   als auch dem Feldablenksignal ihr eigenes zusätzliches
   Steuersignal von einer sehr niedrigen Frequenz hinzugefügt wird, um einen Bildpunkt in einem kleinen Bereich (12) auf dem Bildschirm zu verschieben, dadurch
   gekennzeichnet, daß beide zusätzlichen Steuersignale
   im wesentlichen kontinuierlich geändert werden, um einen Bildpunkt langsam innerhalb des kleinen Bereiches
   (12) zu verschieben und daß die Frequenzen der hinzugefügten Signale so wenig voneinander abweichen, daß
   sich eine zwischen ihnen bestehende Phasendifferenz
   von Null zu Null über eine sehr lange Zeitspanne erstreckt, die vorzugsweise viele Male das Zehnfache
   oder Hundertfache der Dauer einer Periode dieser Signale beträgt.


2. Verfahren nach Anspruch 1, dadurch gekennzeichnet, daß
   die Periodendauer der hinzugefügten Signale in der Größenordnung von 1 bis 5 Minuten liegt.


3. Verfahren nach Anspruch 1 oder 2, dadurch gekennzeichnet, daß die Frequenzen der hinzuzufügenden Signale
   auf der Basis der Feldfrequenz oder der Netzfrequenz
   synchronisiert sind.

**Fig. 1**

**Fig. 1a**

~3min

**Fig. 2**

**Fig. 2a**